(19) Europäisches Patentamt
European Patent Office
Office européen des brevets

(11) Publication number: 0 329 322 A2

(12) # EUROPEAN PATENT APPLICATION

(21) Application number: 89301157.7

(51) Int. Cl.4: G01N 27/46

(22) Date of filing: 07.02.89

(30) Priority: 19.02.88 GB 8803910

(43) Date of publication of application:
23.08.89 Bulletin 89/34

(84) Designated Contracting States:
DE FR GB IT SE

(71) Applicant: The BOC Group plc
Chertsey Road
Windlesham Surrey GU20 6HJ(GB)

(72) Inventor: Compton, Richard Guy
17 Blackhall Road
Oxford(GB)
Inventor: Northing, Richard John
St. Hugh's College
Oxford(GB)

(74) Representative: Wickham, Michael et al
c/o Patent and Trademark Department The
BOC Group plc Chertsey Road
Windlesham Surrey GU20 6HJ(GB)

(54) **Sensing of vapours.**

(57) In an electrochemical method of detecting a vapour, for example enflurane or isoflurane, the vapour is passed through a membrane into a non-aqueous electrolyte solution in contact with an electrode, an electric potential is applied to the electrode and electron transfer between the vapour and the electrode is catalysed by a mediator substance, whereby a measurable electric current is produced indicative of the vapour or its concentration. The mediator is preferably a fluoranthene which may be formed into a polymer to enable it to be immobilised on the membrane. A novel polymer, poly-11-vinyl fluoranthene may be prepared for use in the invention.

FIG. 2

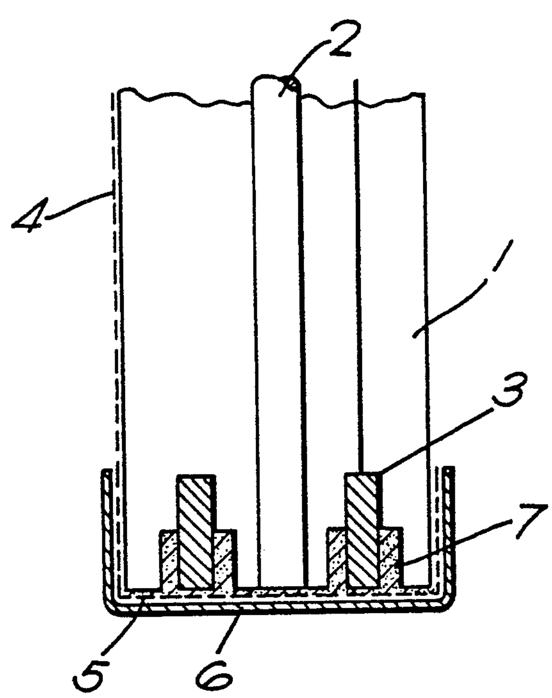


EP 0 329 322 A2

# SENSING OF VAPOURS

This invention relates to a device and a method for sensing vapours, for example halocarbon vapours. It also relates to novel polymers for use in such device and method.

The invention is particularly concerned with electrochemical sensing of an inhaled anaesthetic vapour, for example Halothane ($CF_3CHClBr$), enflurane ($CHF_2OCF_2CHFCl$) and isoflurane ($CHF_2OCH\ ClCF_3$) in a mixture with atmospheric gases or other vapours, and with distinguishing between two or more of the above-mentioned anaesthetic vapours in a gas or vapour mixture.

Electrochemical detection of the gases oxygen, carbon dioxide and nitrous oxide by the Clarke type of cell is known. In such a cell the gas diffuses through a thin membrane and is reduced in an aqueous electrolyte. The membrane holds the electrolyte in contact with an anode and a cathode at the tip of a sensor probe such that application of an electric potential across the electrodes produces an electric current indicative of the concentration of gas at the membrane surface. Whilst Halothane can be similarly reduced on a gold or silver anode in an aqueous electrolyte, we have found that enflurane and isoflurane are electronically inert at platinum, gold and silver electrodes in an aqueous or non-aqueous electrolyte and that Halothane is similarly inert in non-aqueous electrolytes. Indeed, no reported electro-activity of enflurane or isoflurane at any electrode with any aqueous or non-aqueous electrolyte is known to us, although we have found that isoflurane is active in a non-aqueous electrolyte comprising dimethyl formamide when mercury electrodes are used, reduction of the isoflurane being achieved at a potential of -3.0 volts vs SCE. However, this potential is too close to the decomposition potential of the electrolyte to be of practical use.

There is thus a need for improved methods and devices for detecting vapours, and the invention aims at meeting this need.

According to the present invention there is provided an electrochemical method of detecting a vapour, wherein the vapour is passed through a membrane into a non-aqueous electrolyte solution in contact with an electrode, an electric potential is applied to the electrode and electron transfer between the vapour and the electrode is catalysed by a mediator substance, whereby a measurable electric current is produced indicative of the vapour or its concentration.

The invention also provides a device for use in the detection of a vapour comprising a membrane holding an electrolyte in contact with an electrode, and a mediator substance in solution in the electrolyte or immobilised on the membrane, whereby, in use, on passage of the vapour through the membrane and on application of an electrical potential to the electrode, the mediator substance catalyses electron transfer between the vapour and the electrode and a measurable electric current indicative of the vapour or its concentration is produced.

The method and apparatus according to the invention are particularly suitable for use in the detection of Halothane, enflurane or isoflurane.

Suitable mediator substances for use in the invention are able to be electrochemically reduced. Fluoranthene is a preferred mediator. Other preferred mediators are substituted fluoranthenes. The substituent may for example be a halogen such as fluorine, chorine or bromine. Hydrocarbon substituents may also be employed.

The choices of electrolyte and electrode are not critical to the invention. A platinum or mercury electrode may for example be used. The electrolyte preferably comprises a solution of an salt in an organic liquid. Acetonitrile is an example of one suitable organic liquid.

In some detection methods according to the invention, the mediator is in solution in the electrolyte. In other methods according to the invention a plurality of mediators having different redox potentials from one another are in solution in the electrolyte. The advantage of such methods is that it makes possible analysis of a mixture comprising a plurality of vapours which require mediated electron transfer to effect their reduction. For example, one mediator substance may be fluoranthene, and the other may be a fluoranthene substitued with one or more halogen or other electron-withdrawing radicals. Such substitution reduces the redox potential of the fluoranthene. Accordingly it can be arranged that the anion of the substituted fluoranthene is able to reduce only one of isoflurane and enflurane at the working potential of the electrode, whereas fluoranthane itself is able to reduce both isoflurane and enflurane.

In practical situations, where it is desired to determine the concentration of anaesthetic halogenated hydrocarbon such as enflurane, isoflurane or Halothane, the anaesthetic is present in a gas mixture with gaseous substances such as water vapour, carbon dioxide and nitrous oxide that will contribute to the current produced by the electrode. This interference may be avoided by employing a metal grid or the like on the electrolyte side of the membrane able to be held at a potential sufficient to reduce all such gases diffusing through the membrane, but at levels below that applied to the

electrode to reduce the enflurane, isoflurane or Halothane. Inevitably, however, the products of reduction of such gases tend to accumulate in the electrolyte thereby reducing the useful life of the device.

When the mediator is dissolved in the electrolyte, the overall response time of a sensing device according to the invention is limited by the time required for the vapour to diffuse through the membrane into the eletrolyte. A shorter response time can be obtained by immobilising the mediator on the membrane. This may be achieved by employing a polymeric substance as the mediator. Substituted or unsubstituted poly-11-(vinyl fluoranthene) is an example of a suitable polymeric mediator.

The poly-11-(vinyl fluoranthene) is prepared by acylating the corresponding substituted or unsubstituted fluoranthene by the Friedel Crafts reaction thereby forming an 11-acetylfluoranthene, reducing the resultant 11-acetylfluoranthene to an 11-(1-hydroxy) ethyl fluoranthene, eliminating a molecule of water from the 11-(1-hydroxy) ethyl fluoranthene to form an 11-vinyl fluoranthene, and then polymersing the 11-vinyl fluoranthene in the presence of free radicals to form the poly-11-vinyl fluoranthene.

Typically, a device according to the invention is used only once and is readily disposable.

Methods and devices according to the invention will now be described by way of example with reference to the accompanying drawings, in which

Figure 1 is a schematic drawing illustrating a Clarke type of cell incorporating a first device according to the invention,

Figure 2 is a schematic drawing illustrating a Clarke type of cell incorporating a second device according to the invention;

Figure 3 shows rotating disc voltammograms for the reduction of fluoranthene in an electrolyte containing different concentration of isoflurane;

Figure 4 shows a cyclic voltammogram for the reduction of a poly-11 -vinyl fluoranthene coating on a platinum electrode,

and Figure 5 shows a similar voltammogram to that illustrated in Figure 4 but with the presence of isoflurane in the electrode.

In the device shown in Figure 1, an electrochemical cell includes a tubular platinum anode 3 which is mounted in a probe body 1 made of inert material such as PTFE together with a cathode electrode 2 such that both electrodes are in contact with an electrolyte 7 containing an electron mediator. A semi-permeable polymer membrane 6 is employed to trap the thin layer of electrolyte 7 in a small reservoir surrounding the tip of the electrodes. The membrane is designed selectively to diffuse the anaesthetic vapour into the electrolyte and is therefore constructed of a material such as PTFE which will not react with the vapour to be sensed.

The electrolyte is for example a 0.1 molar solution of tetrabutyl ammonium perchlorate in acetonitrile. The mediator is preferably fluoranthene.

The cell may be operated by applying a steady potentiostatic working voltage to the anode 3. This voltage causes a measurable current to flow through the cell. The magnitude of the current is indicative of the concentration of vapour to be sensed in the electrolyte 7. Alternatively, the voltage applied may be varied between a reducing and pre-concentrating level so as to obtain a more sensitive measurement of the vapour concentration in the electrolyte.

The electrochemical reduction of fluoranthene (by itself) has been found to obey the Levich equation for a simple one-electron process,

$F + e^- \rightarrow F^-$

where F is

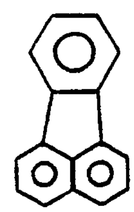

which is electrochemically reversible at an electrode potential of -1.9 volts vs. SCE with a fluoranthene diffusion coefficient of $2.3 \times 10^{-5}$ cm/sec.

The effect of introducing isoflurane in to an electrolyte comprising a 0.1 molar solution of tetrabutyl ammonium perchlorate in acetonitrite containing $3 \times 10^{-3}$ M of fluoranthene is shown in the rotating disc voltammograms of Figure 3. The peak current obtained increases with increasing fluoranthene concentration from about 1.6 mA at zero fluoranthene concentration to about 1.7 mA at fluoranthene concentration of $1.7 \times 10^{-3}$ M, and then to about 2.4 mA at a fluoranthene concentration of $3.3 \times 10^{-3}$ M and finally to about 3 mA at fluoranthene concentration of $5.0 \times 10^{-3}$ M.

These results indicate that the electron mediator is catalysing the electrochemical reduction of isoflurane. Several catalytic mechanisms are possible but from rotating disc experiments, confirmed by electron spin resonance analysis, the mechanism appears to be of the form:-

$F + e^- \rightarrow F^-; F^- + Y \rightarrow F$ + intermediate

and, intermediates $\xrightarrow{K}$ products.

where k is the rate constant,

with an equilibrium constant

$$= \frac{[F] \quad [intermediates]}{[F^{-}] \quad [Y]}$$

where F is fluoranthene and Y is the vapour being reduced.

For isoflurane as substance Y, k is found to be 25.9 sec $^{-1}$ at 25 °C. The electrochemical conversion of F to $F^{-}$ is found to be reversible at a potential of -1.9 volts vs. SCE.

The overall response time of a vapour sensing device as shown in Figure 1 is limited by the time required for the vapour to diffuse through the membrane 6 into the electrolyte 7. A shorter response time can be obtained if the electrochemical reduction of the vapour can be achieved in or one the membrane itself, thereby significantly reducing the vapour diffusion time. Also, a thinner layer of electrolyte may be used, giving a faster electron transfer process.

Referring now to Figure 2, there is shown a cell similar to the one illustrated in Figure 1, like parts in the two cells being indicated by the same reference numerals. The primary difference between the two cells is that in the one shown in Figure 2, no mediator is included in the electrolyte 7. Instead the membrane 6 is provided on its inner surface with an immobilised polymeric mediator substance. The polymer may for example be poly-(11-vinylfluoranthene):-

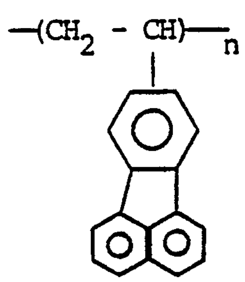

Poly-(11-vinylfluoranthene) is a novel substance and is prepared by the free radical polymerisation of 11-vinylfluoranthene, an intermediate produced from fluoranthene via 11-acetylfluoranthene and 11-(1-hydroxy)ethyl-fluoranthene.

11-Acetylfluoranthene was synthesised as follows:- 6.6 g of aluminium chloride was added to a solution of fluoranthene (5.0 g) in carbon disulphide (50 ml) at 0 °C. Acetic anhydride (2.4 ml) was added over a period of 30 min and the reaction mixture stirred for 7 hours at 0 °C and subsequently at room temperature overnight. A brown solid was collected by filtration, washed with hexane and then treated with 3% hydrochloric acid; the residue was then extracted into ether and the resulting ether solution dried (over sodium sulphate). The solvent was removed, and a reddish syrup separated by chromatography (10% ethyl acetate in hexane) to give a mixture of the two monoacetyl compounds 4- and 11-acetylfluoranthene (2.1 g) and the diacetyl compound. The mixture of the two monoacetyl compounds was then separated by further chromatography (dichloromethane - hexane, 3:1) to give the faster running, non-fluorescent, 4-acetylfluoranthene, (0.74 g), followed by the slower running blue fluorescent 11- acetylfluoranthene (1.2 g), together with a further mixture of unseparated 4-acetylfluoranthene and 11-acetylfluoranthene (300 mg).

11-(1-hydroxy) ethyl-fluoranthene was produced as follows:- sodium borohydride (129 mg) in water (9 ml) was slowly added to a solution of 11-acetylfluoranthene (620 mg) in tetrahydrofuran (60 ml) at 0 °C; the reaction mixture was stirred at 0 °C for 2.5 hours and at room temperature for 2 hours, and then cooled to 0 °C and treated with ammonium chloride. The solvent was removed in vacuo to give 11- (1-hydroxy) ethyl-fluoranthene (620 mg) recrystallised from ether hexane.

Finally, Poly(11-vinylfluoranthene) was obtained as follows:-
11-(1-hydroxy) ether-fluoranthene (400 mg) in benzene (60 ml) was refluxed in the presence of toluene p-sulphonic acid (10 mg) for 3.5 hours. The reaction mixture was cooled and neutralised (solid sodium carbonate) and the solvent removed; the resulting yellow solid was dissolved in ether and washed in brine, dried (sodium sulphate). After the solvent had been removed, the yellow residue was purified by flash chromatography (neat hexane) to give 11-vinylfluoranthene (200 mg). PVF was obtained in quantitative yield by refluxing a 5 * $10^{-3}$ M solution of the vinyl monomer in dichloromethane for two hours at 40 °C using AIBN as initiator. The polymer was characterised by GPC, using tetrahydrofuran as solvent and shown to have a molecular weight of around 30,000.

It was found that stable, even, polymer films could best be obtained by evaporation on to a platinum electrode of a small quantity of a PVC/dichloromethane solution, producing films of the order of $10^{-7}$ m thick.

The ability of a cell such as the one shown in Figure 2 to effect the electrochemical reduction of a vapour such as isoflurane has been demonstrated by using a rotating disc platinum electrode coated with poly-11-vinylfluoranthene. Referring now to Figure 4, there is shown a cyclic voltammorgram scanned at a rate of 100 mV/s whilst immersed in a 0.1 M solution of tetrabutyl ammonium perchlorate in acetonitrite in the absence of the vapour to be detected. The means of the voltage at the forward and reverse peaks corresponds to the value of the reduction potential obtained in Figure 3. Accordingly, it can be deduced that each pendant fluoranthene group receives one electron, and this is confirmed by the experimental observation that the charge passed corresponds quantitatively with the amount of polyvinyl fluoranthene deposited on the surface.

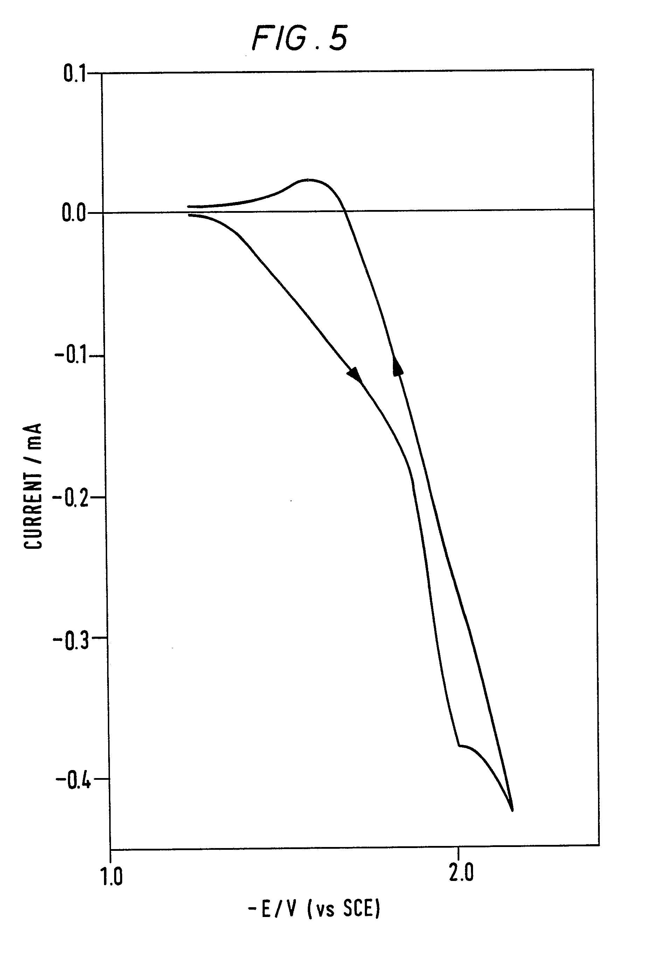

In Figure 5, there is illustrated a similar cyclic voltammogram to the one shown in Figure 4. The voltammogram shown in Figure 5 is taken with a concentration of isoflurane (15 x $10^{-3}$ M) dissolved in the electrolyte. The reduction peak is considerably enhanced reflecting the catalytic behaviour of the mediator previously described. However, the sensitivity of the measurement is reduced.

Various changes and additions may be made to the cells shown in Figure 1 and 2 without departing from the scope of the invention. For example, both cells may be provided with a metal gridor the like adjacent the inner surface of the membrane 6. Whereas the membrane 6 is relatively impermeable to diatomic gases such as nitrogen and oxygen, and monatomic gases such as argon, it is permeated by gases such as nitrous oxide, carbon dioxide and water vapour. If the sample of gas being monitored or analysed by a cell shown in Figure 1 or 2 includes such gases a potential may be applied to the grid 5 sufficient to reduce all the species diffusing through the membrane save that of the vapor to be detected. The products of the reduction such as hydrogen peroxide will tend to accumulate in the electrolyte, thus reducing the useful life of the cell.

Typically, in the use the anode and cathode of the cell are connected across an ammeter to enable a visual indication of the current flowing to be gained. It will be appreciated that the ammeter may be calibrated in terms of the concentration of the vapour to be detected. In order to compensate for varying temperature, a suitable temperature compensating circuit employing a thermistor may be used in an apparatus according to the invention. The construction and operation of such circuits are well known in the art and will not be described further herein.

Referring again to Figure 2, the stability of the poly vinyl fluoranthene polymer film applied to the membrane 6 may be limited, and this will limit the useful lifetime of the cell. Accordingly, the cell may be a disposable device constructed for continuous operation over a limited lifetime, which may be increased by an intermittent mode of operation, in which the working potential are applied only when a measurement is required.

The operation of the cells shown in Figures 1 and 2 has been described with respect to the detection of a single halogenated hydrocarbon vapour such as isofluirance, it is possible, however, to modify the cell shown in Figure 1 to make it able to analyse mixtures of such hydrocarbons.

In order to discriminate between say isoflurane and enflurane, the reducing potentials of the mediator need to be modified in order that several levels can be sequentially applied to the electrode. By taking the differences between the corresponding currents, the concentration of the respective vapours in a mixture may be derived.

Modification of the working potentials may be achieved by introducing electron withdrawing substituents such as F, Cl or Br into the fluoranthene molecule. This will lower its redox potential to a value between that of enflurane and isoflurane such that the anion of the substituted fluoranthene reduces only enflurane or isoflurane. Then using a mixture of fluoranthene and the substituted fluoranthene in the electrolyte and making successive measurements at the modified working potentials, it is possible to discriminate between the concentrations of enflurane and isoflurane in a vapour mixture.

## Claims

1. An electrochemical method of detecting a vapour, wherein the vapour is passed through a membrane into a non-aqueous electrolyte solution in contact with an electrode, an electric potential is applied to the electrode and electron transfer between the vapour and the electrode is catalysed by a mediator substance, whereby a measurable electric current is produced indicative of the vapour or its concentration.

2. A method as claimed in Claim 1, in which the vapour is Halothane, (1,1,1-trifluoro 2-bromo 2-chloro ethane) enflurane or isoflurane.

3. A method as claimed in Claim 1 or 2, in which the mediator is immobilised on the membrane.

4. A method as claimed in Claim 3, in which the mediator is a polymeric substance, containing pendant fluoranthene groups.

5. A method as claimed in Claim 4, in which the polymer is poly-11-vinyl fluoranthene.

6. A method as claimed in Claim 1 or Claim 2 in which the mediator substance is fluoranthene and/or a substitued fluoranthene.

7. A method as claimed in any one of the preceding claims, in which a metal grid or the like is employed on the electrolyte side of the membrane and is held at a potential sufficient to reduce all gases diffusing through the electrode, save the one or ones to be detected.

8. A method as claimed in any one of preceding claims, in which electrolyte comprises a solution of a salt in an organic liquid, the organic liquid being acetonitrile, and the salt being tetrabutyl ammonium perchlorate.

9. A method as claimed in any one of the preceding claims, in which the electrode comprises an anode.

10. A device for use in the detection of a vapour, comprising a membrane holding an electrolyte in contact with an electrode, and a mediator substance in solution the electrolyte or immobilised on the membrane, whereby, in use, on passage of the vapour through the membrane and on application of an electrical potential to the electrode, the mediator substance catalyses electron transfer between the vapour and the electrode and a measurable electric current indicative of the vapour or its concentration is produced.

11. A device as claimed in Claim 10, in which the mediator is a polymer containing pendant fluoranthene groups.

12. A device as claimed in Claim 11, in which the polymer is poly-11-vinyl fluoranthene.

13. A device as claimed in Claim 10, in which the mediator is fluoranthene and/or a substituted fluoranthene.

14. A device as claimed in any of Claims 10 to 13, additionally including a metal grid or the like on the electrolyte side of the membrane able to be held at a potential sufficient to reduce all gases diffusing through the membrane save the ones to be detected.

15. A device as claimed in any one of Claims 10 to 14, in which the electrolyte comprises a solution of a salt in an organic liquid, the liquid being acetonitrile, and the salt being tetrabutyl ammonium perchlorate.

16. Poly-11-vinyl fluoranthene.

17. Substituted poly-11-vinyl fluoranthene, wherein the or each substitutent is selected from halogens and other electron withdrawing radicals.

18. A method of preparing substituted or unsubstituted poly-11-vinyl fluoranthene comprising acylating the corresponding substituted or unsubstituted fluoranthene by the Friedel Crafts reaction thereby forming an 11-acetyl fluoranthene, reducing the resultant 11- acetyl fluoranthene to an 11-(1-hydroxy) ethyl fluoranthene, eliminating a molecule of water from the resultant 11-(1-hydroxy) ethyl fluoranthene to form a 11-vinyl fluoranthene and polymerising the 11-vinyl 1 fluoranthene in the presence of free radicals to form the poly-11-vinyl fluoranthene.

Neu eingereicht / Newly filed
Nouvellement déposé

FIG. 1

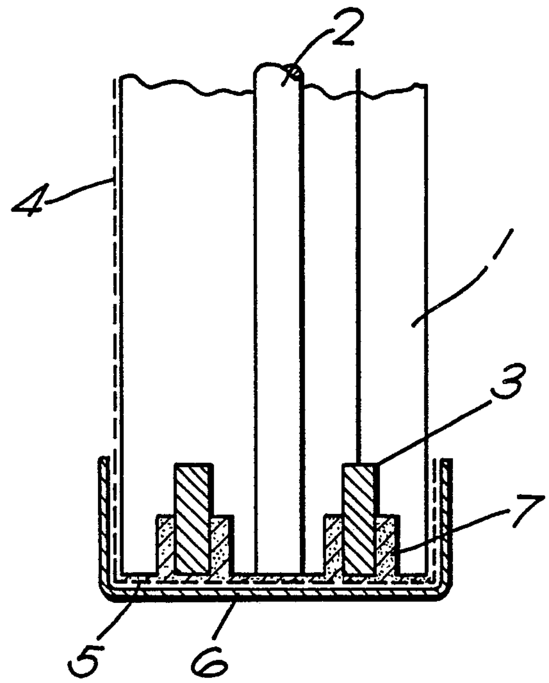


FIG. 2

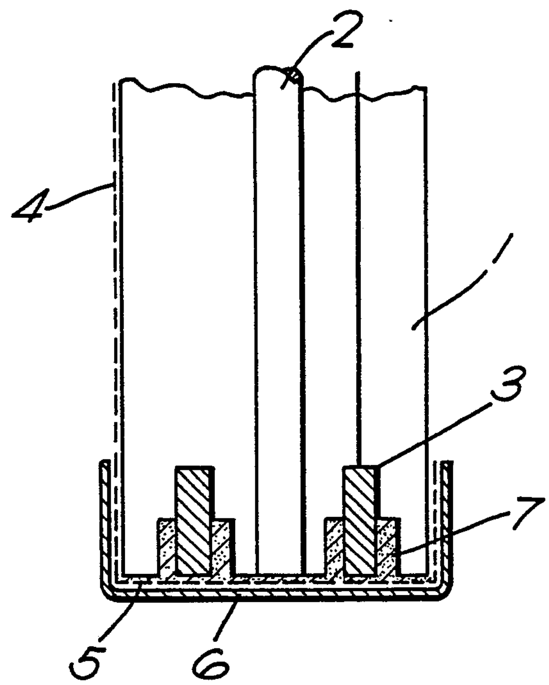

Neu eingereicht / Newly filed
Nouvellement déposé



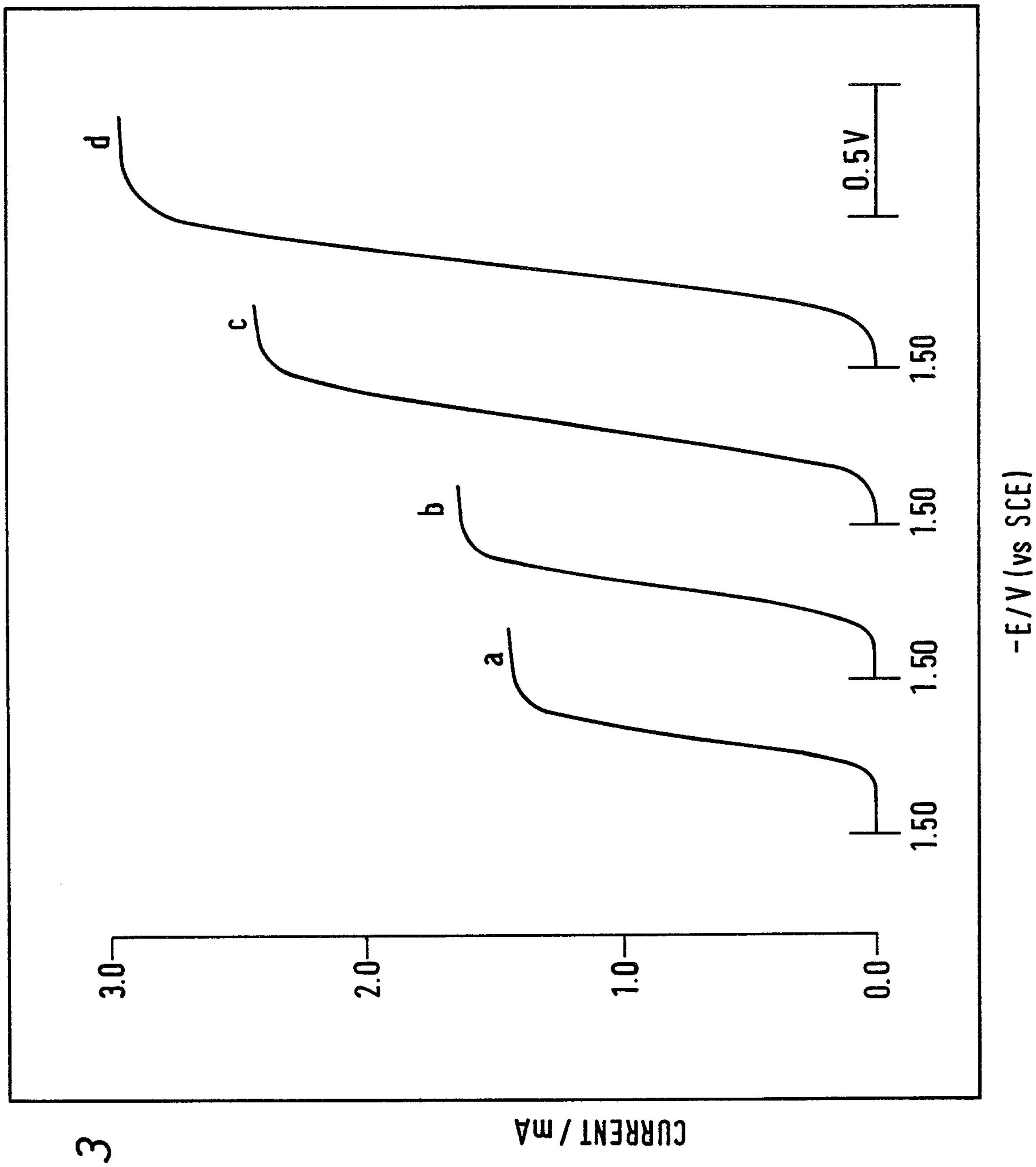


FIG. 3

Neu eingereicht / Newly filed
Nouvellement déposé



FIG. 4

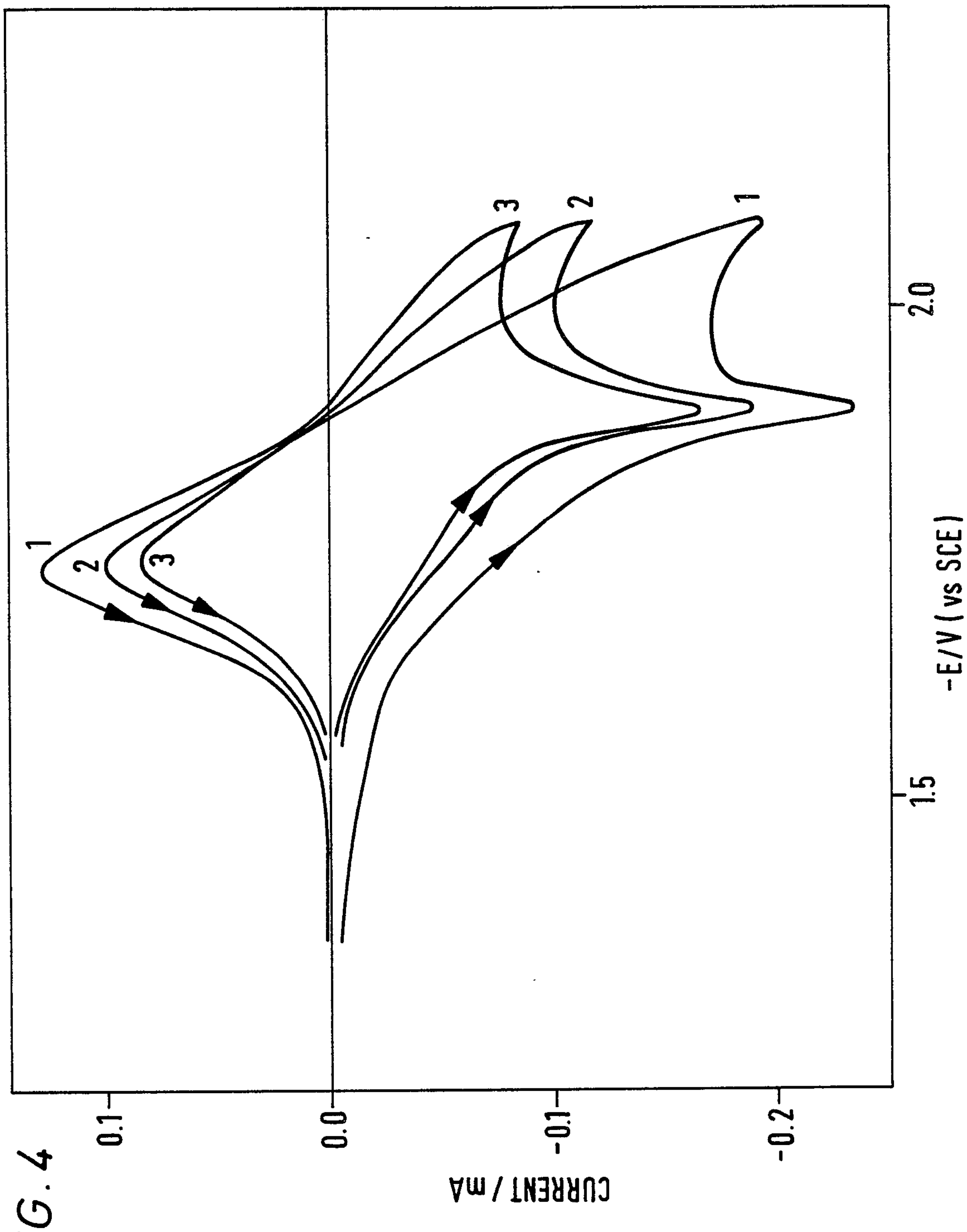

FIG. 5